# EUROPEAN PATENT SPECIFICATION

(11) **EP 3 293 327 B1**
(45) Date of publication and mention of the grant of the patent: **14.04.2021**
(21) Application number: 17189467.8
(22) Date of filing: 05.09.2017
(51) Int. Cl.: E05B 19/04, A01M 25/00, A45C 11/32, B25F 1/04

(54) **BAIT BOX MAINTENANCE TOOL**
KÖDERDOSENWARTUNGSWERKZEUG
OUTIL D'ENTRETIEN DE BOÎTE D'APPÂTS

(30) Priority: 08.09.2016 GB 201615247
(43) Date of publication of application: 14.03.2018
(73) Proprietor: Pelsis Limited, Grimbald Crag Close Knaresborough North Yorkshire HG5 8PJ (GB)
(72) Inventor: Fish, John, Knaresborough, North Yorkshire HG5 8PJ (GB)
(74) Representative: Appleyard Lees IP LLP

(56) References cited:
- EP-A1- 2 719 279
- WO-A1-2012/015304
- WO-A1-2014/117206
- WO-A1-2014/202101
- DE-U1- 8 802 235
- GB-A- 2 235 619
- US-A- 2 630 212
- US-A- 3 618 346

## Description

### FIELD

This application relates to a bait box maintenance tool and a kit of parts therefor.

### BACKGROUND

A common method for managing pests such as rodents is to lay poison, often combined with a lure (referred to in the art as bait), at appropriate locations throughout a site. The poison is typically stored in a locked box (referred to in the art as a bait box), which provides a suitably sized aperture to ensure the poison is only accessible by the target pests that are to be controlled, and to prevent accidental consumption of the poison by either humans or non-target pests. In order to withstand lengthy exposure to the elements, the bait box and its locking mechanism are usually both substantially formed of plastic, with the key for operating the locking mechanism also being formed of plastic.

Numerous bait boxes will be distributed over a site such as a commercial premise, and the installation and subsequent servicing of the boxes, including replenishment of poison and replacement of damaged boxes, carried out by a specialist service engineer. A particular key is provided for a given brand or model of bait box, which allows the service engineer to unlock the bait box for servicing.

However, difficulties can arise when further bait boxes are installed of different brands or models. This often occurs when service contracts change, and a new service company replaces some but not all of the existing bait boxes. The new boxes will have locking mechanisms and keys that are different from the existing bait boxes, and so the service engineer must inconveniently retain keys for various types of boxes. The problem is compounded by the fact that a service engineer will typically visit multiple sites in a day, each possible having multiple different types of box requiring different keys. Accordingly, the service engineer has to go to some effort to store and organise these numerous bait box keys so that they are easily accessible and usable during a service call, and ensure that the loss of keys is minimised.

It is an object of the invention to overcome the above-mentioned difficulties, and any other difficulties that would be apparent to the skilled reader from the description that follows. It is a further object of the invention to provide a cost effective, robust and easy-to-operate means of conveniently storing the keys associated with bait boxes.

WO 2014/202101 A1, US 3618346 A, GB 2235619 A, US 2630212 A and DE 8802235 U1 disclose tools with rotatable keys.

### SUMMARY

According to the present invention there is provided an apparatus and kit of parts as set forth in the appended claims 1 and 8. Other optional features of the invention will be apparent from the dependent claims, and the description which follows.

According to a first aspect of the invention there is provided a bait box maintenance tool as defined in claim 1.

The stowed position may be a retracted position. The deployed position may be an extended position in which the key extends outward from the periphery of the hub.

The hub may comprise a plurality of edges, wherein the stowed position of each key is a position proximate to, preferably parallel to, a respective edge. The hub may comprise four edges. The bait box maintenance tool preferably comprises four keys.

The boss may comprise a stop portion, operable to prevent rotation of the key beyond the stop portion. The stop portion may be operable to contact a corresponding stop surface of the key, so as to prevent the rotation of the key. The stop portion may extend outward from the end of the boss, preferably in a direction parallel to the axis of the cylindrical portion. The stop surface may extend outward, preferably radially outward, from the cylindrical portion. The boss may comprise two stop portions, operable to prevent rotation of the key beyond the stowed and deployed positions respectively.

Each key may be attachable and detachable from the hub. The retaining region of each key may be radially compressible, preferably resiliently compressible, wherein the compression reduces the diameter of the retaining region to allow insertion or withdrawal of the cylindrical portion to or from the aperture. The cylindrical portion may comprise one or more slits, so as to allow compression in the retaining region.

The bait box maintenance tool comprises an indexing means, preferably one indexing means per key, operable to retain each key in the deployed position. The indexing means may be operable to retain a key in its stowed position. The indexing means comprise one or more projections on its respective boss, each projection being receivable in an aperture, a slit, on the cylindrical portion. The projections may be equally spaced around the circular aperture of the boss. Preferably, each boss comprises four projections.

According to a second aspect of the invention there is provided a kit of parts of a bait box maintenance tool as defined in claim 8.

Further preferred features of the components required in the kit of the second aspect are defined hereinabove in relation to the first aspect and may be combined in any combination.

### BRIEF DESCRIPTION OF DRAWINGS

For a better understanding of the invention, and to show how embodiments of the same may be carried into effect, reference will now be made, by way of example, to the accompanying diagrammatic drawings in which:
Figure 1 is a front perspective view of an example bait box maintenance tool;
Figure 2 is a rear perspective view of the bait box maintenance tool of Figure 1;
Figure 3 is an exploded perspective view of the bait box maintenance tool of Figures 1 and 2;
Figure 4 is a magnified view of a portion of Figure 3;
Figure 5 is a side view of part of the key shown in Figure 4;
Figure 6 is a front view of part of the hub shown Figure 4,
Figures 7 to 10 are front perspective views showing operation of the bait box maintenance tool, and
Figure 11 is an enlarged rear perspective view of the bait box maintenance tool.

In the drawings, corresponding reference characters indicate corresponding components.

### DESCRIPTION OF EMBODIMENTS

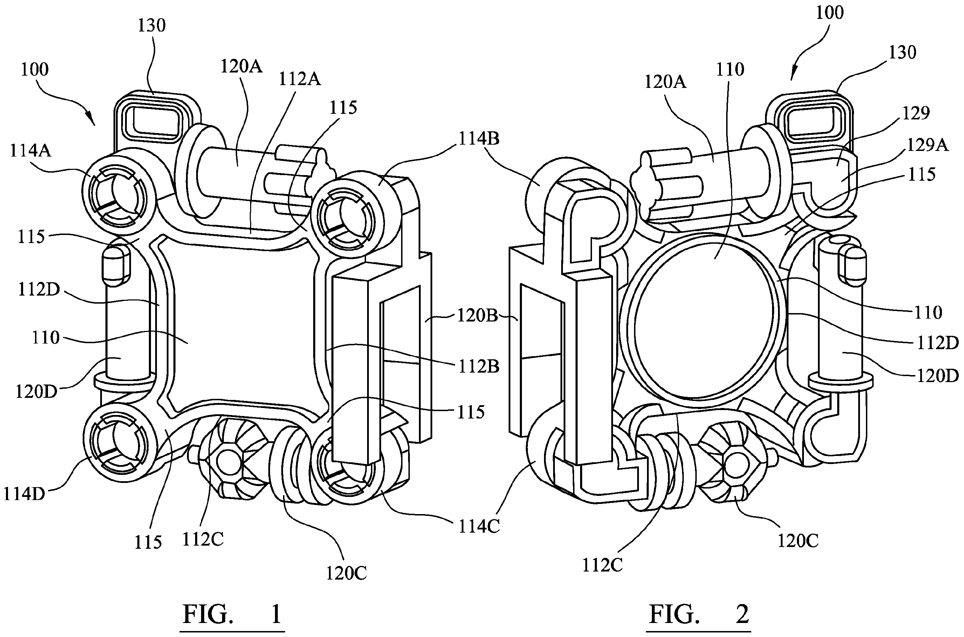

Figures 1 and 2 show a bait box maintenance tool 100 in accordance with an example of the invention. The bait box maintenance tool 100 comprises a central hub 110, and a plurality of keys 120A-D disposed around a periphery of the hub 110.

The central hub 110 is a relatively thin and flat member, defined by a number of edges 112A-D around its periphery. Accordingly, the central hub 110 effectively takes the shape of a polygonal prism, which may be shallow in cross-section.

Each key 120 is disposed at a position corresponding to one of the edges 112.

In one example, the keys 120 and hub 110 are formed from plastics materials. Particularly, the keys 120 and hub 110 are formed from a thermoplastic such as ABS (acrylonitrile butadiene styrene) or polypropylene. Such materials are relatively strong, so as to provide a robust tool, but flexible enough to allow attachment and detachment of the keys 120 from the hub 110 in the manner outlined below. It will be understood that at least some parts of the keys 120 may also comprise metal.

In the example shown, the hub 110 comprises 4 edges 112A-D, and the central hub is substantially square, and therefore defining a shallow cuboid. Accordingly, the tool 100 is able to accommodate 4 keys 120.

The hub 110 further comprises a plurality of bosses 114A-D disposed on the periphery thereof. In one example, the bosses 114 are disposed between the edges 112, thereby effectively formed at the vertices between the edges 112.

The bosses 114 are each positioned at the end of an arm section 115, the arm section 115 extending radially outward from the vertex between the edges 112.

Each boss 114 is able to receive and retain a corresponding key 120. Particularly, the keys 120 may be attachable and detachable from the bosses 114, so that a user can select appropriate keys 120 and configure them on the tool 100 as desired. Furthermore, each boss 114 is able to support rotational movement of the corresponding key 120 from a stowed, or retracted, position in which it is close to an edge 112 to a deployed, or extended, position in which it extends radially outward from the hub 110. In one example, the retracted position is a position in which the key 120 is substantially parallel to an edge 112. The positioning of the boss 114 at the end of the arm section 115 conveniently allows each key 112 to be accommodated in a space between two adjacent bosses 114, giving the tool 100 a compact and substantially square overall appearance.

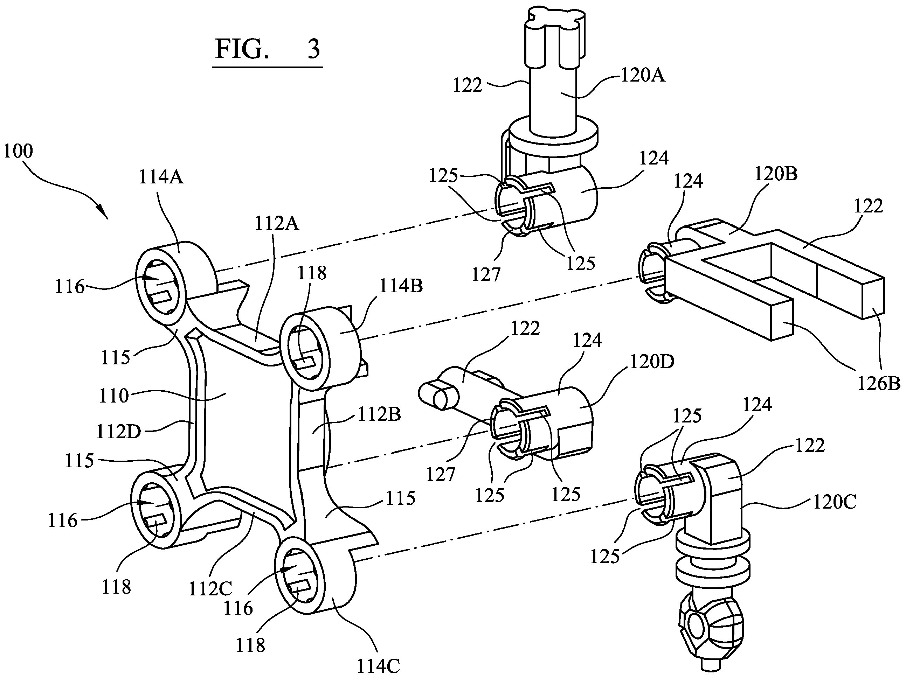

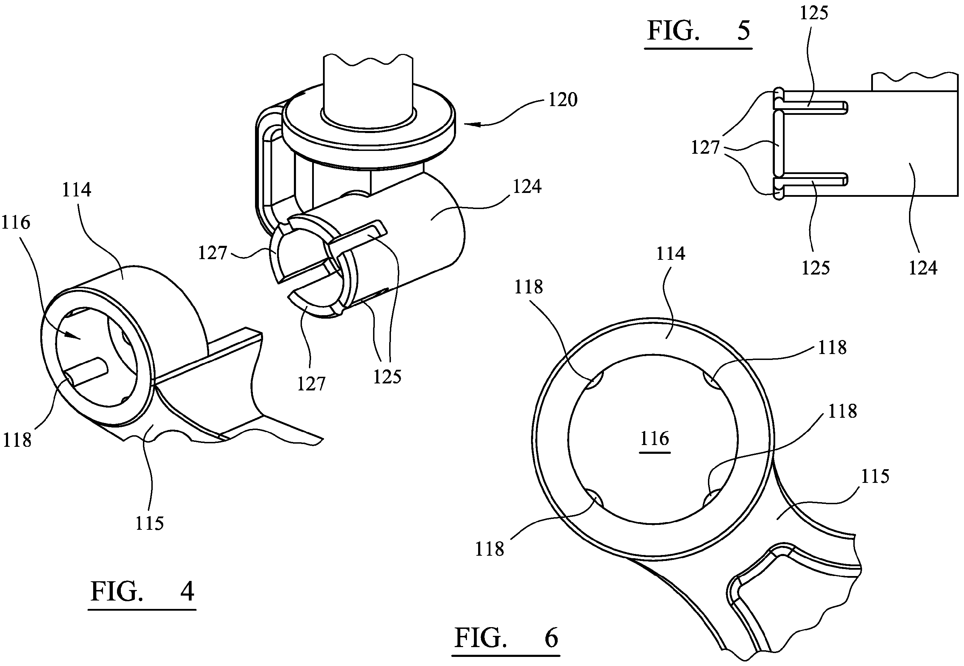

Figure 3 shows an exploded view of the bait box maintenance tool 110 with the keys 120 removed from the bosses 114. Figures 4 and 6 shows the bosses 114 in more detail. The bosses 114 take the form of hollow cylinders, with the aperture or through-hole 116 in each boss 114 being operable to receive a key 120.

The interior surface of the cylinder comprises a plurality of projections 118 extending parallel to the longitudinal axis of the boss 114. Each projection 118 is adapted to cooperate with a corresponding slit 125 in the key 120, which will be described in further detail below. In the example shown in Figure 4, the projections extend around 2/3 the depth of the aperture 116, but it will be understood that the length thereof may be varied.

As can be best seen in Figure 6, the projections 118 may be rounded or chamfered in cross-section, so as to permit smooth co-operation with the slit 125 of the key 120. The projections 118 may be equally spaced on the interior surface of the boss 114. The bosses 114 shown in the figures comprise 4 equally spaced projections 114, 90° apart.

The keys 120 are best seen in Figure 3, and comprise a key portion 122 and a barrel portion 124. The barrel portion 124 is a hollow cylinder, the exterior of which is operable to engage with a corresponding boss 114, and has a size corresponding to the aperture 116 defined by the boss 114. The key portion 112 extends radially from the barrel portion 114, and is shaped to engage with a locking mechanism on a corresponding bait box, for example by being inserted into the bait box locking mechanism and then turned.

Typically, as in keys 120A, 120C and 120D, the key portion 122 comprises a shaft with projections and recesses, wherein projections and recesses cooperate with corresponding projections and recesses in the bait box locking mechanism. Another exemplary key 120B instead comprises a plurality of tines or prongs 126B. It will be appreciated that the shape of the key portion 120 may be varied to fit the desired bait box locking mechanisms.

The barrel portion 124 is shown in more detail in Figures 4 and 5. The barrel portion 124 comprises a plurality of slits 125, starting at the end of the barrel portion 124 that is inserted into the boss and extending part-way along the barrel portion 124. The slits 125 are spaced to correspond with the spacing of the projections 118. The barrel portion 124 also comprises a beaded portion 127 extending around the end of the barrel portion 124 that is inserted into the boss 114 and having a diameter slightly wider than the rest of the barrel portion 124. At least the region of the barrel portion 124 comprising the slits 125 is formed from a resiliently deformable material, so as to allow compression of the barrel portion 124 in the region around the slits 125.

One or more of the keys 120 may comprise a loop portion 130 (best seen in Figures 1, 2 4 and 7-10), arranged proximate to the junction between the barrel portion 124 and key portion 122. The loop portion 130 is a loop of material extending outward from the key 120 and adapted to receive a hook, chain or key ring, thereby providing a convenient means of hanging the tool 100 for storage or carrying.

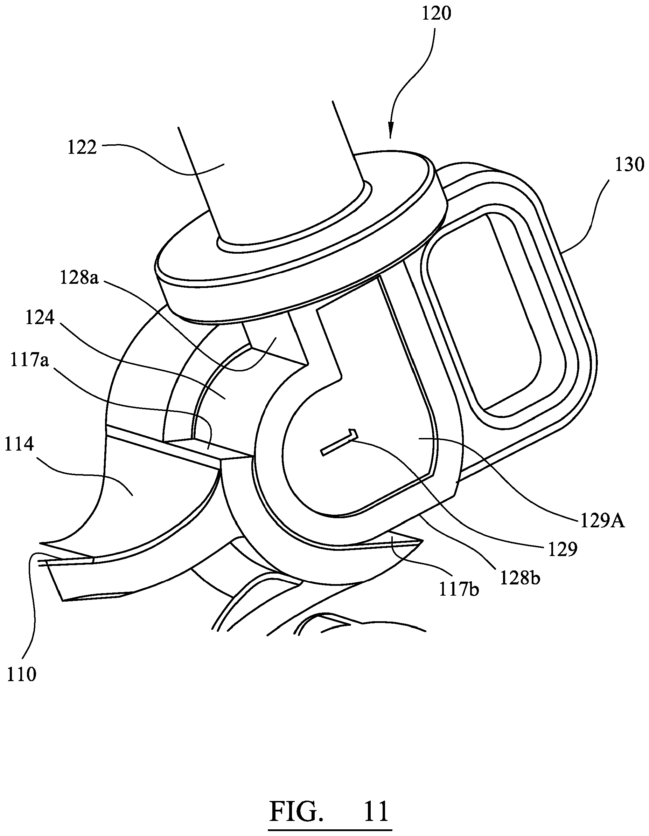

As can be best seen in Figure 11, each boss 114 comprises at least one stop portion 117, which is operable to make contact with a corresponding stop surface 128 of a key 120 so as to prevent rotation of the key 120 beyond the stop portion 117. The stop portion 117 is a portion extending outward from the end of the boss 114 in a direction parallel to the axis of the barrel portion 124, and the stop surface 128 is a portion extending radially from the barrel portion 124. As shown in Figure 11, the stop surface 128 may form part of the connection between the barrel portion. Accordingly, the stop portion 117 interferes with the rotation of the key by contacting the stop surface 128. The stop portion and stop surface may be substantially flat surfaces.

In one example, the boss 114 comprises two stop portions 117a, 117b operable to contact corresponding stop surfaces 128a, 128b of the key. The stop portions 117a, 117b therefore define the respective limits of the rotation of the key 120, wherein the limits correspond to the stowed and deployed positions respectively. Accordingly, the key 120 is prevented from rotating beyond the stowed or deployed positions.

Attachment and detachment of a key 120 to the hub 110 will now be described with reference to Figure 3.

Firstly, the end of the barrel portion 124 comprising the beading portion 127 is inserted by a user into the aperture 116 defined by the boss 114. As mentioned above, the beaded portion 127 has a diameter slightly wider than the remainder of the barrel portion 124, and thus is also slightly wider than the aperture 116. However, the slits 125 allow the beaded portion 127 to be radially compressed by the aperture 114 during insertion, deforming the end of the barrel portion 124 so that it can be inserted.

The user continues to insert the barrel portion 124 into the aperture 116 until the beaded portion 127 emerges from the other end of the aperture 116, wherein the compression of the beaded portion ends and the beaded portion 127 returns to its original diameter. Accordingly, the beaded portion 127 once again has a wider diameter than the aperture 116, thus positively retaining the barrel portion 124 therein.

In order to detach the key 120, the user must apply a sufficient pulling force on the key 120 to cause the beaded portion 127 to compress and pass into the aperture 116. Once this initial pulling force is provided, the key 120 may then simply be removed by withdrawing the barrel 124 from the aperture.

It will be understood that the tool 100 may be provided as a kit of parts comprising more keys 120 than the number of bosses 114 present on the tool 100. Accordingly, the user may swap the keys 120 according to preference and need. Each of the keys 120 may be numbered or labelled to indicate which bait box they are operable to unlock, for example by means of etching, printing, or the application of a label. For example, each key 120 may be provided with a number 129 disposed in a flat portion 129A in the region of the junction between barrel portion 124 and key portion 122.

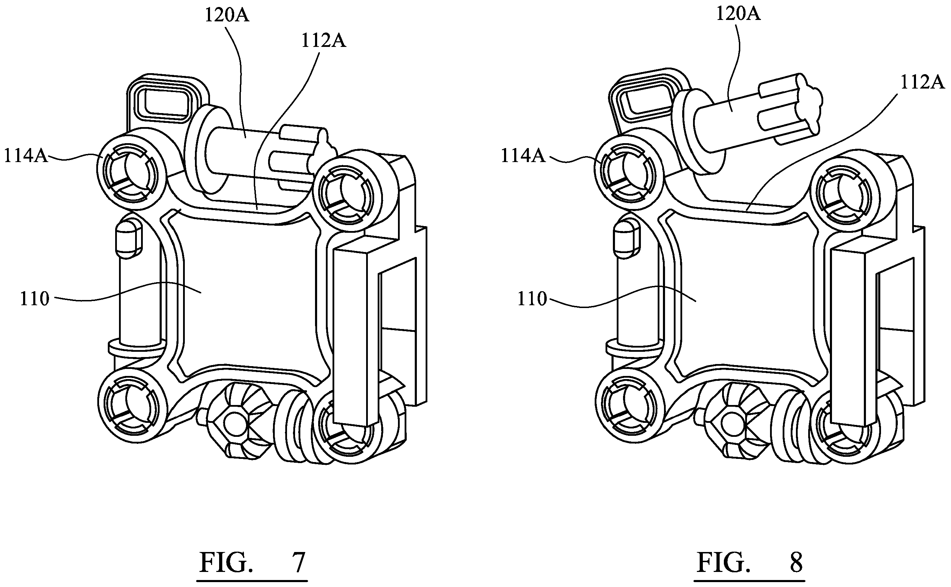

Operation of the tool 100 will now be described with reference to Figures 7 to 10, which progressively show the key 120A being rotated to the deployed position. The key 120A is rotated away from its position proximate to the edge 112, with the cylindrical barrel portion 124 co-operating with the cylindrical aperture 116 of the boss 114 to act as a hinge.

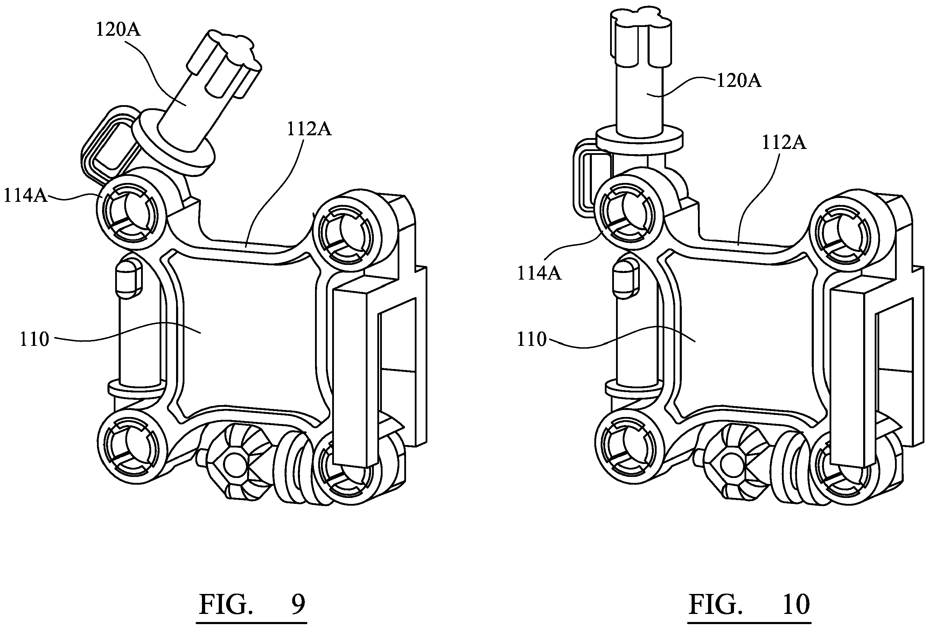

The process is reversed to stow the key 120A. In other words, key 120A is progressively rotated back to the stowed position from the position shown in Figure 10 to the position shown in Figure 7.

In both the stowed position and in the deployed position, the projections 118 coincide with the slits 125 and are received therein. Accordingly, when in either the stowed or deployed position, the key 120 is positively retained and unwanted rotation is prevented. When sufficient rotational force is applied by a user, the slits 125 and projections 118 disengage by virtue of the barrel 124 compressing, aided by the rounded profile of the projections 118. Consequently, once the disengagement occurs, the key 120 is able to rotate freely until it reaches either the stowed or deployed position. Furthermore, the stop portions 117a, 117b and respective stop surfaces 128a, 128b come into contact with each other in the stowed and deployed positions respectively, thereby preventing further rotation of the key 120.

Various modifications will be apparent to those skilled in the art. For example, the hub 110 may comprise further edges 112, and thus be able to accommodate more keys 120. For example, the hub 110 could be pentagonal, hexagonal, heptagonal or octagonal, and therefore able to accommodate 5, 6, 7 or 8 keys 120, or any other further number of keys. Whilst in the example shown the edges 112 are of equal length, it will be understood that this need not necessarily be the case, and the hub 110 may have edges 112 of different lengths. Such an arrangement may be particularly advantageous when using keys 120 of differing lengths. Furthermore, whilst the example shown involves one key 120 corresponding to one edge 112, it will be understood that multiple keys may be disposed on a single edge, with corresponding bosses disposed along the edge. In further examples, the edges may be curved arcs, and/or the hub may be circular. Fewer or more slits and projections may be provided on the barrels and bosses respectively, and at different spacings, in order to appropriately control the rotation of the keys.

Advantageously, the bait box maintenance tool described herein provides a convenient means of managing the numerous keys required by a service engineer who services various premises having various types of bait box. The advantageously structured tool allows the service engineer to quickly and easily identify the correct key for a given bait box, deploy it, and then use it to open the bait box without removing it from the hub. Furthermore, the bait box maintenance tool provides an advantageously simple-to-operate and compact means of storing the keys, particularly with the keys in the stowed position. Accordingly, time and effort spent by a service engineer searching for the appropriate key for a given type of bait box, along with storage space, is minimised.

The invention is not restricted to the details of the foregoing embodiment(s).

## Claims

1. A bait box maintenance tool (100) comprising a hub (110) and a plurality of bait box keys (120) attached around a periphery of the hub (110), wherein each key (120) is rotatable from a stowed position to a deployed position,
wherein the hub (110) comprises a plurality of bosses (114), each adapted to support the rotation of a respective key (120), wherein the bosses (114) each comprise a substantially circular aperture (116) operable to receive a substantially cylindrical portion (124) of the respective key (120), wherein the cylindrical portion (124) is rotatable relative to the boss, wherein the bait box maintenance tool (100) further comprises an indexing means (118, 125) operable to retain each key in the deployed position, and
wherein the indexing means comprise one or more projections (118) extending parallel to a longitudinal axis of the boss (114) on an interior face of the substantially circular aperture (116) of the respective boss,
wherein that the cylindrical portion (124) comprises retaining means to retain the cylindrical portion (124) in the aperture (116), charac
terised in that the retaining means comprise a retaining region (127) of the cylindrical portion (124) having an increased diameter with respect to the remainder of the cylindrical portion (124), thereby preventing withdrawal of the cylindrical portion (124) from the aperture (116),
wherein the retaining region (127) of each key (120) is resiliently radially compressible, wherein the compression reduces the diameter of the retaining region (127) to allow insertion or withdrawal of the cylindrical portion (124) to or from the aperture (116),
wherein the cylindrical portion (124) comprises one or more slits (125), so as to allow compression in the retaining region (127) and in that the or each projection (118) is receivable in one of the slits (125) on the respective cylindrical portion.

2. The bait box maintenance tool of claim 1, wherein the deployed position is an extended position in which the key (120) extends outward from the periphery of the hub (110).

3. The bait box maintenance tool of claim 1 or 2, wherein the hub (110) comprises a plurality of edges (112), wherein the stowed position of each key (120) is a position proximate to a respective edge (112).

4. The bait box maintenance tool of claim 3, wherein the stowed position of each key (120) is a position substantially parallel to a respective edge (112).

5. The bait box maintenance tool of any preceding claim, wherein each boss (114) comprises a stop portion (117), operable to prevent rotation of the key (120) beyond the stop portion (117).

6. The bait box maintenance tool of claim 5, comprising two stop portions (117a,b), operable to prevent rotation of the key (120) beyond the stowed and deployed positions respectively.

7. The bait box maintenance tool of any preceding claim, wherein each key (120) is attachable to and detachable from the hub (110).

8. A kit of parts of a bait box maintenance tool (100), the kit comprising a hub (110) and a plurality of detached keys (120) attachable to the periphery of the hub (110), wherein, once attached, each key (120) is rotatable from a stowed position to a deployed position in which the key (120) extends outward from a periphery of the hub (110),
wherein the hub (110) comprises a plurality of bosses (114), each adapted to support the rotation of a respective key (120),
wherein the bosses (114) each comprise a substantially circular aperture (116) operable to receive a substantially cylindrical portion (124) of the respective key (120), wherein the cylindrical portion (124) is rotatable relative to the boss, when received by the aperture (116), wherein the bait box maintenance tool (100) further comprises an indexing means (118, 125) operable to retain each key in the deployed position, and
wherein the indexing means comprise one or more projections (118) extending parallel to a longitudinal axis of the boss (114) on an interior face of the substantially circular aperture (116) of the respective boss,
wherein the cylindrical portion (124) comprises retaining means to retain the cylindrical portion (124) in the aperture (116),
**characterised in that** the retaining means comprise a retaining region (127) of the cylindrical portion (124) having an increased diameter with respect to the remainder of the cylindrical portion (124), thereby preventing withdrawal of the cylindrical portion (124) from the aperture (116),
wherein the retaining region (127) of each key (120) is resiliently radially compressible, wherein the compression reduces the diameter of the retaining region (127) to allow insertion or withdrawal of the cylindrical portion (124) to or from the aperture (116),
wherein the cylindrical portion (124) comprises one or more slits (125), so as to allow compression in the retaining region (127) and **in that** the or each projection (118) is being receivable in one of the slits (125) on the respective cylindrical portion.

## Patentansprüche

1. Köderdosen-Wartungswerkzeug (100), ein Zentrum (110) und mehrere Köderdosenschlüssel (120) umfassend, die rings um einen Umfang des Zentrums (110) angeordnet sind, wobei jeder Schlüssel (120) von einer verstauten Position in eine aufgestellte Position drehbar ist,
wobei das Zentrum (110) mehrere Lagernaben (114) umfasst, die jeweils dafür eingerichtet sind, die Drehung eines entsprechenden Schlüssels (120) abzustützen, wobei die Lagernaben (114) jeweils eine im Wesentlichen kreisrunde Öffnung (116) umfassen, die funktionsfähig ist, einen im Wesentlichen zylinderförmigen Abschnitt (124) des entsprechenden Schlüssels (120) aufzunehmen, wobei der zylinderförmige Abschnitt (124) im Verhältnis zur Lagernabe drehbar ist,
wobei das Köderdosen-Wartungswerkzeug (100) ferner Rastmittel (118, 125) umfasst, die funktionsfähig sind, jeden Schlüssel in der aufgestellten Position zu halten, und
wobei die Rastmittel einen oder mehrere Vorsprünge (118) umfassen, die sich parallel zu einer Längsachse der Lagernabe (114) an einer Innenfläche der im Wesentlichen kreisrunden Öffnung (116) der entsprechenden Lagernabe erstrecken,
wobei der zylinderförmige Abschnitt (124) Haltemittel umfasst, um den zylinderförmigen Abschnitt (124) in der Öffnung (116) zu halten,
**dadurch gekennzeichnet, dass** die Haltemittel einen Haltebereich (127) des zylinderförmigen Abschnitts (124) umfassen, der einen in Bezug auf den Rest des zylinderförmigen Abschnitts (124) vergrößerten Durchmesser aufweist, wodurch das Herausziehen des zylinderförmigen Abschnitts (124) aus der Öffnung (116) verhindert wird,
wobei der Haltebereich (127) jedes Schlüssels (120) radial elastisch komprimierbar ist, wobei die Kompression den Durchmesser des Haltebereichs (127) vermindert, um das Einfügen oder Herausziehen des zylinderförmigen Abschnitts (124) in die oder aus der Öffnung (116) zu ermöglichen,
wobei der zylinderförmige Abschnitt (124) einen oder mehrere Schlitze (125) aufweist, um die Kompression des Haltebereichs (127) zu ermöglichen, und
dadurch, dass der oder jeder Vorsprung (118) in einen der Schlitze (125) in dem zylinderförmigen Abschnitt aufgenommen werden kann.

2. Köderdosen-Wartungswerkzeug nach Anspruch 1, wobei die aufgestellte Position eine erweiterte Position ist, in der sich der Schlüssel (120) vom Umfang des Zentrums (110) nach außen erstreckt.

3. Köderdosen-Wartungswerkzeug nach Anspruch 1 oder 2, wobei das Zentrum (110) mehrere Ränder (112) umfasst, wobei die verstaute Position jedes Schlüssels (120) eine Position nahe einem entsprechenden Rand (112) ist.

4. Köderdosen-Wartungswerkzeug nach Anspruch 3, wobei die verstaute Position jedes Schlüssels (120) eine Position ist, die im Wesentlichen parallel zu einem entsprechenden Rand (112) liegt.

5. Köderdosen-Wartungswerkzeug nach einem der vorhergehenden Ansprüche, wobei jede Lagernabe (114) einen Anschlagabschnitt (117) umfasst, der funktionsfähig ist, eine Drehung des Schlüssels (120) über den Anschlagabschnitt (117) hinaus zu verhindern.

6. Köderdosen-Wartungswerkzeug nach Anspruch 5, zwei Anschlagabschnitte (117a, b) umfassend, die funktionsfähig sind, eine Drehung des Schlüssels (120) über die verstaute beziehungsweise aufgestellte Position hinaus zu verhindern.

7. Köderdosen-Wartungswerkzeug nach einem der vorhergehenden Ansprüche, wobei jeder Schlüssel (120) an dem Zentrum (110) angebracht und von diesem gelöst werden kann.

8. Bausatz aus Teilen eines Köderdosen-Wartungswerkzeugs (100), wobei der Bausatz ein Zentrum (110) und mehrere getrennte Schlüssel (120) umfasst, die an dem Umfang des Zentrums (110) angebracht werden können, wobei jeder Schlüssel (120), sobald er angebracht ist, von einer verstauten Position in eine aufgestellte Position drehbar ist, in der sich der Schlüssel (120) vom Umfang des Zentrums (110) nach außen erstreckt,
wobei das Zentrum (110) mehrere Lagernaben (114) umfasst, die jeweils dafür eingerichtet sind, die Drehung eines entsprechenden Schlüssels (120) abzustützen,
wobei die Lagernaben (114) jeweils eine im Wesentlichen kreisrunde Öffnung (116) umfassen, die funktionsfähig ist, einen im Wesentlichen zylinderförmigen Abschnitt (124) des entsprechenden Schlüssels (120) aufzunehmen, wobei der zylinderförmige Abschnitt (124) im Verhältnis zur Lagernabe drehbar ist, wenn er in der Öffnung (116) aufgenommen ist,
wobei das Köderdosen-Wartungswerkzeug (100) ferner Rastmittel (118, 125) umfasst, die funktionsfähig sind, jeden Schlüssel in der aufgestellten Position zu halten, und
wobei die Rastmittel einen oder mehrere Vorsprünge (118) umfassen, die sich parallel zu einer Längsachse der Lagernabe (114) an einer Innenfläche der im Wesentlichen kreisrunden Öffnung (116) der entsprechenden Lagernabe erstrecken,
wobei der zylinderförmige Abschnitt (124) Haltemittel umfasst, um den zylinderförmigen Abschnitt (124) in der Öffnung (116) zu halten,
**dadurch gekennzeichnet, dass** die Haltemittel einen Haltebereich (127) des zylinderförmigen Abschnitts (124) umfassen, der einen in Bezug auf den Rest des zylinderförmigen Abschnitts (124) vergrößerten Durchmesser aufweist, wodurch das Herausziehen des zylinderförmigen Abschnitts (124) aus der Öffnung (116) verhindert wird,
wobei der Haltebereich (127) jedes Schlüssels (120) radial elastisch komprimierbar ist, wobei die Kompression den Durchmesser des Haltebereichs (127) vermindert, um das Einfügen oder Herausziehen des zylinderförmigen Abschnitts (124) in die oder aus der Öffnung (116) zu ermöglichen,
wobei der zylinderförmige Abschnitt (124) einen oder mehrere Schlitze (125) aufweist, um die Kompression des Haltebereichs (127) zu ermöglichen, und
dadurch, dass der oder jeder Vorsprung (118) in einen der Schlitze (125) in dem zylinderförmigen Abschnitt aufgenommen werden kann.

## Revendications

1. Outil de maintenance de boîte d'appât (100) comprenant un centre (110) et une pluralité de clefs de boîte d'appât (120) attachées autour d'une périphérie du centre (110), dans lequel chaque clef (120) est peut être mise en rotation depuis une position escamotée jusqu'à une position déployée,
dans lequel le centre (110) comprend une pluralité de bossages (114), chacun adapté pour supporter la rotation d'une clef respective (120), dans lequel les bossages (114) comprennent chacun une ouverture sensiblement circulaire (116) utilisable pour recevoir une partie sensiblement cylindrique (124) de la clef respective (120), dans lequel la partie cylindrique (124) peut être mise en rotation relativement au bossage,
dans lequel l'outil de maintenance de boîte d'appât (100) comprend en outre des moyens d'indexage (118, 125) utilisables pour retenir chaque clef dans la position déployée, et
dans lequel les moyens d'indexage comprennent une ou plusieurs saillies (118) s'étendant parallèlement à un axe longitudinal du bossage (114) sur une face intérieure de l'ouverture sensiblement circulaire (116) du bossage respectif,
dans lequel la partie cylindrique (124) comprend des moyens de retenue pour retenir la partie cylindrique (124) dans l'ouverture (116),
**caractérisé en ce que** les moyens de retenue comprennent une région de retenue (127) de la partie cylindrique (124) ayant un diamètre augmenté par rapport au reste de la partie cylindrique (124), ainsi empêchant le retrait de la partie cylindrique (124) à partir de l'ouverture (116),
dans lequel la région de retenue (127) de chaque clef (120) est compressible de façon radialement résiliente, dans lequel la compression réduit le diamètre de la région de retenue (127) pour permettre l'insertion ou le retrait de la partie cylindrique (124) dans ou à partir de l'ouverture (116),
dans lequel la partie cylindrique (124) comprend une ou plusieurs fentes (125), afin de permettre la compression dans la région de retenue (127), et
**en ce que** la ou chaque saillie (118) peut être reçue dans une des fentes (125) sur la partie cylindrique respective.

2. Outil de maintenance de boîte d'appât selon la revendication 1, dans lequel la position déployée est une position étendue dans laquelle la clef (120) s'étend vers l'extérieur à partir de la périphérie du centre (110).

3. Outil de maintenance de boîte d'appât selon la revendication 1 ou 2, dans lequel le centre (110) comprend une pluralité de bords (112), dans lequel la position escamotée de chaque clef (120) est une position à proximité d'un bord respectif (112).

4. Outil de maintenance de boîte d'appât selon la revendication 3, dans lequel la position escamotée de chaque clef (120) est une position sensiblement parallèle à un bord respective (112).

5. Outil de maintenance de boîte d'appât selon une quelconque revendication précédente, dans lequel chaque bossage (114) comprend une partie de butée (117), utilisable pour empêcher la rotation de la clef (120) au-delà de la partie de butée (117).

6. Outil de maintenance de boîte d'appât selon la revendication 5, comprenant deux parties de butée (117a, b), utilisables pour empêcher la rotation de la clef (120) au-delà des position escamotée et déployée respectivement.

7. Outil de maintenance de boîte d'appât selon une quelconque revendication précédente, dans lequel chaque clef (120) est attachable au, et détachable du, centre (110).

8. Kit de pièces d'un outil de maintenance de boîte d'appât (100), le kit comprenant un centre (110) et une pluralité de clefs détachées (120) attachables à la périphérie du centre (110), dans lequel, une fois attachée, chaque clef (120) peut être mise en rotation depuis une position escamotée jusqu'à une position déployée dans laquelle la clef (120) s'étend vers l'extérieur à partir d'une périphérie du centre (110),
dans lequel le centre (110) comprend une pluralité de bossages (114), chacun adapté pour supporter la rotation de a clef respective (120),
dans lequel les bossages (114) comprennent chacun une ouverture sensiblement circulaire (116) utilisable pour recevoir une partie sensiblement cylindrique (124) de la clef respective (120), dans lequel la partie cylindrique (124) peut être mise en rotation relativement au bossage, lorsqu'elle est reçue par l'ouverture (116),
dans lequel l'outil de maintenance de boîte d'appât (100) comprend en outre des moyens d'indexage (118, 125) utilisables pour retenir chaque clef dans la position déployée, et
dans lequel les moyens d'indexage comprennent une ou plusieurs saillies (118) s'étendant parallèlement à un axe longitudinal du bossage (114) sur une face intérieure de l'ouverture sensiblement circulaire (116) du bossage respectif,
dans lequel la partie cylindrique (124) comprend des moyens de retenue pour retenir la partie cylindrique (124) dans l'ouverture (116),
**caractérisé en ce que** les moyens de retenue comprennent une région de retenue (127) de la partie cylindrique (124) ayant un diamètre augmenté par rapport au reste de la partie cylindrique (124), ainsi empêchant le retrait de la partie cylindrique (124) à partir de l'ouverture (116),
dans lequel la région de retenue (127) de chaque clef (120) est compressible de façon radialement résiliente, dans lequel la compression réduit le diamètre de la région de retenue (127) pour permettre l'insertion ou le retrait de la partie cylindrique (124) dans ou à partir de l'ouverture (116),
dans lequel la partie cylindrique (124) comprend une ou plusieurs fentes (125), afin de permettre la compression dans la région de retenue (127), et
**en ce que** la ou chaque saillie (118) peut être reçue dans une des fentes (125) sur la partie cylindrique respective.
